**Europäisches Patentamt**

**European Patent Office**

**Office européen des brevets**

(19)

(11) Veröffentlichungsnummer : **0 340 679 B1**

(12) # EUROPÄISCHE PATENTSCHRIFT

(45) Veröffentlichungstag der Patentschrift :
**24.06.92 Patentblatt 92/26**

(51) Int. Cl.⁵ : **F16L 3/12, F16L 3/22**

(21) Anmeldenummer : **89107800.8**

(22) Anmeldetag : **28.04.89**

(54) **Halter für einen oder mehrere langgestreckte Gegenstände.**

(30) Priorität : **02.05.88 DE 8805815 U**

(43) Veröffentlichungstag der Anmeldung :
**08.11.89 Patentblatt 89/45**

(45) Bekanntmachung des Hinweises auf die
Patenterteilung :
**24.06.92 Patentblatt 92/26**

(84) Benannte Vertragsstaaten :
**DE FR GB NL**

(56) Entgegenhaltungen :
**FR-A- 2 324 920**
**GB-A- 2 183 287**
**US-A- 3 980 263**

(73) Patentinhaber : **Paul Hellermann GmbH**
**Siemensstrasse 5**
**W-2080 Pinneberg (DE)**

(72) Erfinder : **Köster, Lothar, Dr.-Ing.**
**Bei den Düneneichen 16**
**W-2050 Hamburg 80 (DE)**

(74) Vertreter : **Glawe, Delfs, Moll & Partner**
**Patentanwälte**
**Liebherrstrasse 20**
**W-8000 München 26 (DE)**

## Beschreibung

Die Erfindung betrifft einen Halter für einen oder mehrere langgestreckte Gegenstände mit einem einen Aufnahmeraum für die Gegenstände einschließenden U-förmigen, zwei Teile aufweisenden Umfassungskörper, der eine durch eine Rastklappe schließbare Öffnung aufweist und im Aufnahmeraum Federzungen enthält.

Bei einem bekannten Halter (DE-A 2442414) sind mehrere Federzungen vorgesehen, die einen in sich einheitlichen Aufnahmeraum für die langgestreckten Gegenstände abgrenzen, der kleiner ist, als der durch den Umfassungskörper insgesamt zur Verfügung gestellte Aufnahmeraum. Sie legen die Lage eines im Querschnitt kleineren Gegenstands federnd fest, ohne die Aufnahme eines größeren zu hindern. Jedoch haben sie den Nachteil, daß bei Aufnahme von zwei im Querschnitt kleiner Gegenstände deren Lage unsicher ist. Das gilt auch für eine ähnliche bekannte Ausführung (DE-A 3236422) bei der eine verhältnismäßig langgestreckte Federzunge zur Bildung eines einheitlichen Aufnahmeraums vorgesehen ist.

Ähnliches gilt für bekannte Halter der eingangs genannten Art, bei denen der Aufnahmeraum auf zwei gegenüberliegenden Seiten durch Federzungen begrenzt ist (US-A-3 980 263) oder bei dem der Aufnahmeraum allseitig durch die U-förmigen Teile umschlossen wird (GB-A-2 183 287), während die Lage der Federzungen von der Zahl und Größe der eingeführten langgestreckten Gegenstände abhängen wird. Ein sicheres Festlegen mehrerer langgestreckter Gegenstände ist aber auf jeden Fall ebenfalls nicht möglich.

Der Erfindung liegt die Aufgabe zugrunde, einen Halter der eingangs genannten Art zu schaffen, der Gegenstände kleineren Querschnitts besser positioniert.

Die erfindungsgemäße Lösung besteht darin, daß der Aufnahmeraum auf der einen Seite von dem einen der Umfassungsteile und auf der anderen Seite von Federzungen begrenzt ist, die in bezug auf den Umfassungsraum konkave und vorspringende Bereiche aufweisen, wodurch mindestens zwei Teil-Aufnahmeräume gebildet sind.

Der Begriff konkav ist in diesem Zusammenhang so zu deuten, daß die die Konkavität bildende Oberfläche zumindest zwei in Umfangsrichtung voneinander distanzierte Anlagepunkte für die Gegenstandsoberfläche bildet. Dabei ist für jeden der Teil-Aufnahmeräume je eine konkave, zweckmäßigerweise federnde Oberfläche vorgesehen, die von ein und derselben oder auch von mehreren Federzungen gebildet sein können.

Die den Teil-Aufnahmeraum abgrenzende Federzunge ist an ihrem freien Ende zweckmäßigerweise so ausgebildet, daß sie sich an dem Umfassungskörper direkt oder indirekt abstützt. Insbesondere kann eine zweite Federzunge vorgesehen sein, die sich direkt am Umfassungskörper abstützt, während die vorgenannte, erste Federzunge, sich an der zweiten Federzunge abstützt. Die Funktion der zweiten Federzunge braucht sich in dieser Abstützung nicht zu erschöpfen; sie kann vielmehr ebenfalls zur Bildung eines zweiten Teil-Aufnahmeraums ausgebildet sein. Die beiden Teil-Aufnahmeräume sollten dann zur Bildung eines großen Aufnahmeraums miteinander verbunden sein. Dabei ist der die Teil-Aufnahmeräume abgrenzende Vorsprung zweckmäßigerweise so kurz und /oder nachgiebig ausgebildet, daß die Teil-Aufnahmeräume als einheitlicher Aufnahmeraum gemeinsam nutzbar sind.

Die Öffnung und für deren Verschluß vorhandene Teile sollten von den aufgenommenen Gegenständen nicht oder jedenfalls nicht so belastet werden, daß der Öffnungsverschluß dadurch unbeabsichtigt gelöst werden könnte. Deshalb sollte der Teil-Aufnahmeraum von der Öffnung bzw. einem die Öffnung schließenden Teil getrennt sein. Insbesondere kann ein zusätzlicher Vorsprung vorgesehen sein, der den Teil-Aufnahmeraum von der Öffnung trennt. Dieser zusätzliche Vorsprung kann starr am Umfassungskörper gebildet sein. Nach einem besonderen Merkmal der Erfindung ist ein solcher Vorsprung federnd, beispielsweise in der Art einer Federzunge, ausgebildet.

Die Erfindung wird im folgenden näher unter Bezugnahme auf die Zeichnung erläutert, die ein vorteilhaftes Ausführungsbeispiel veranschaulicht. Darin zeigen:

Fig. 1 und 2 zwei gleiche Halter mit unterschiedlichen Befestigungsteilen im leeren Zustand und

Fig. 3 bis 6 den Halter gemäß Fig. 1 enthaltend Kabel unterschiedlicher Zahl und Größe.

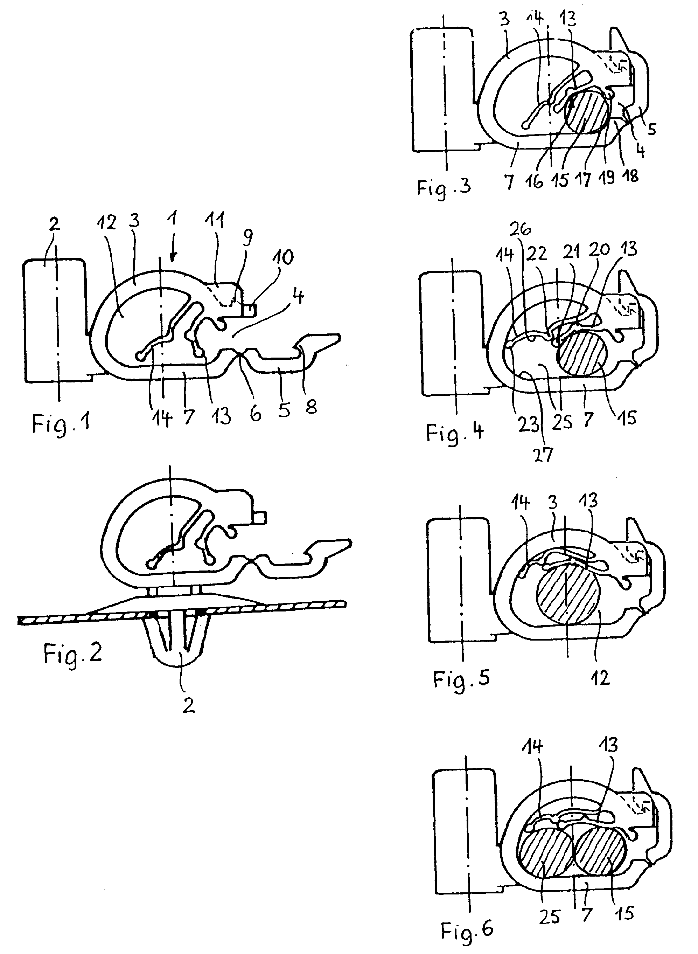

Der Halter 1 ist mit einem Befestigungsteil 2 versehen, der gemäß Fig. 1 zur Montage auf einem Schweißbolzen und gemäß Fig. 2 zum Verankern in einer Blechbohrung ausgebildet ist.

Der Halter 1 besteht aus einem U- förmig gebogenem Umfassungsteil 3, der einstückig mit dem Befestigungsteil 2 verbunden ist und aus zähem, elastisch biegsamem Kunststoff besteht. Seine Öffnung 4 ist mittels einer Klappe 5 verschließbar, die mittels eines Filmscharniers 6 am unteren Teil 7 des Umfassungsteils 3 angelenkt ist und mittels Rastorganen 8, 9 mit dem anderen Ende des Umfassungsteils 3 verrastbar ist, wobei bekannterweise Vorsprünge 10, 11 beiderseits des Rastorgans 9 vorgesehen sind, die ein seitliches Abgleiten des Rastorgans 8 verhindern.

Innerhalb des Aufnahmeraums 12 befinden sich eine erste Federzunge 13 und eine zweite Federzunge 14. Gemäß Fig. 3 bildet die erste Federzunge 13 einen ersten Teil-Aufnahmeraum 15 zur Aufnahme eines schraffiert angedeuteten, langgestreckten Gegenstands, beispielsweise eines Kabels, der größtenteils von der konkaven Unterfläche 16 der Federzunge 13 und dem unteren Teil 7 des Umfassungsteils 3 begrenzt wird. Die Begrenzung des Aufnahmeraums 15 nach links wird durch das Ende 21 der Federzunge 13 markiert, daß in der Art eines elastischen Vorsprungs von oben nach unten (bezogen auf die Zeichnung) in den Aufnaheraum vorragt.

Benachbart der Öffnung 4 geht der untere Umfassungsteil 7 in eine konkave Krümmung 17 über, die von einem starren Vorsprung 18 gebildet ist und dadurch den aufgenommenen Gegenstand von der Öffnung 4 und der Klappe 5 fernhält. Ferner ist am oberen Rand der Öffnung 4 ein federnder Vorsprung 19 vorgesehen, der demselben Zweck dient. Der im Aufnahmeraum 15 befindliche Gegenstand kann daher nicht durch zur Öffnung 4 gerichtete Kräfte gegen die Klappe 5 gedrängt werden und diese öffnen. Der elastische Vorsprung 19 ist nachgiebig genug, um das Einführen des Gegenstands durch die Öffnung 4 nicht zu behindern. Außerdem ist der Umfassungsteil 3 nachgiebig genug, um auch großen Gegenständen die Einführung durch die Öffnung 4 zu gestatten.

In der Konfiguration gemäß Fig. 3 wird der Gegenstand allein durch die Kraft der Federzunge 13 in der vorgesehenen Lage gehalten. Wenn der Gegenstand etwas größer ist, wird die Federzunge 13 gemäß Fig. 4 wieder nach oben, innen, gebogen und stützt sich dadurch mit ihrem den Vorsprung 21 bildenden, verdickten Ende sowie mit einer weiteren Kontakt- oder Rastverdickung 20 an der Unterfläche bzw. einer Rastverdickung 22 der zweiten Federzunge 14 ab, deren verdicktes Ende 23 sich an dem Umfassungsteil 3 abstützt. Die auf den Gegenstand in dem Teil-Aufnahmeraum 15 ausgeübte Haltekraft wird dadurch beträchtlich verstärkt. Die Lagesicherung erfolgt durch die Konkavität der Unterfläche der Federzunge 13 in Verbindung mit dem unteren Teil 7 des Umfassungsteils 3. Die Verdickungen 20 bis 23 erleichtern das Ausformen der Gegenstände beim Ausstoßen aus der Form. Das verdickte Ende 21 der Federzunge 13 bildet dabei mit Unterstützung des Teils 22 den Vorsprung, der die Teil-Aufnahmeräume 15 und 25 voneinander trennt, wobei auch der Raum 25 einen Gegenstand aufnehmen könnte, dessen Gestalt sich die konkave Unterfläche 26 der Federzunge 14, die gemeinsam mit der konkaven Fläche 27 des Umfassungskörper 3 den zweiten Teil-Aufnahmeraum 25 bildet, dem Umriß des Gegenstands bestens anpaßt.

Fig. 5 zeigt die Verhältnisse bei Aufnahme eines noch dickeren Gegenstands in den Aufnahmeraum 12. Die zweite Federzunge 14 stützt sich mehrfach am Umfassungskörper 3 ab. Entsprechend härter ist die Abstützung, die die Federzunge an ihr findet. Der von den Teilen 21, 22 gebildetete Vorsprung weicht dabei elastisch so weit zurück, daß die Nutzung des gesamten, einheitlichen Aufnahmeraums 12 nicht beeinträchtigt wird.

Auch mehrere Gegenstände werden in dem Aufnahmeraum sicher positioniert, wie Fig. 6 veranschaulicht. Ein erster Teil-Aufnahmeraum 15 wird - wie im Fall der Fig. 4 - hauptsächlich durch die Federzunge 13 und den unteren Teil 7 des Umfassungsteils gebildet, während ein zweiter Teil-Aufnahmeraum 25 von den Enden der Federzungen 13 und 14 sowie dem unteren Teil 7 des Umfassungsteils gebildet wird.

Die mittlere Verdickung 20 und die Endverdickung 21 der Federzunge 13 erlauben eine definierte Anlage an der Federzunge 14. Entsprechend weist die Federzunge 14 im mittleren Bereich zwecks Anlage an der Verdickung 21 der Federzunge 13 sowie zur Unterstützung der Bildung eines Vorsprungs eine Verdickung 22 sowie am Ende eine Verdickung 23 zur Anlage am Umfassungsteil auf.

Die beiden Federzungen 13, 14 verlaufen im entspannten Zustand (Fig. 1) etwa quer zu der Richtung, in der die Gegenstände durch die Öffnung 4 in den Halter eingeführt werden. Wenn die Gegenstände eingeführt sind, liegen sie mehr oder weniger parallel zu dem gegenüberliegenden Teil 7 des Umfassungskörpers.

## Patentansprüche

1. Halter für einen oder mehrere langgestreckte Gegenstände mit einem einen Aufnahmeraum (12) für die Gegenstände einschließenden, U-förmigen, zwei Teile (3, 7) aufweisenden Umfassungskörper (3), der eine durch eine Rastklappe (5) schließbare Öffnung (4) aufweist und im Aufnahmeraum (12) zum elastisch nachgiebigen Positionieren der Gegenstände vorspringende Federzungen ( 13, 14) enthält, wodurch mindestens zwei Teil-Aufnahmeräume (15, 25) gebildet sind, dadurch gekennzeichnet, daß die Teil-Aufnahmeräume (15, 25) auf der einen Seite von dem einen (7) der Umfassungsteile und auf der anderen Seite von Federzungen (13, 14) begrenzt sind, die beiderseits eines Vorsprungs ( 21, 22 ) den dadurch abgegrenzten Teil-Aufnahmeräumen (15, 25) je eine konkave Oberfläche (16, 26) zuwenden, wobei die Lagesicherung durch die Konkavität der Federzungen (13, 14) in Verbindung mit der Konkavität des einen (7) der Umfassungsteile erfolgt.

2. Halter nach Anspruch 1, dadurch gekennzeichnet, daß eine Federzunge (13) sich an der anderen (14) abstützt.

3. Halter nach einem der Ansprüche 1 oder 2, dadurch gekennzeichnet, daß eine Federzunge (14) an ihrem freien Ende (23) zur Abstützung an dem Umfassungskörper (3) ausgebildet ist.

4. Halter nach einem der Ansprüche 1 bis 3, dadurch gekennzeichnet, daß der Vorsprung (21, 22) so kurz und/oder nachgiebig gehalten ist, daß die von ihm abgegrenzten Teil-Aufnahmeräume (15, 25) als einheitlicher Aufnahmeraum nutzbar sind.

5. Halter nach einem der Ansprüche 1 bis 4, dadurch gekennzeichnet, daß ein Vorsprung (18, 19) die Öffnung (4) von dem nächstgelegenen Teil -Aufnahmeraum ( 15 ) trennt.

6. Halter nach Anspruch 5, dadurch gekennzeichnet, daß der Vorsprung (19) federnd ausgebildet ist.


**Claims**

1. A retaining means for one or more elongate articles, having a U-shaped encircling member (3) in two parts (3, 7), which encloses a chamber (12) for accommodating the articles and has an opening (4), which can be closed by a catch-type flap (5), and in the accommodating chamber (12) includes projecting resilient tongues (13, 14) for the elastically flexible location of the articles, whereby at least two accommodating chamber portions (15, 25) are formed, characterised in that, on one side, the accommodating chamber portions (15, 25) are bounded by one (7) of the encircling parts and, on the other side, they are bounded by the resilient tongues (13, 14) which on both sides of a projection (21, 22) have concave surfaces (16, 26) which face towards the accommodating chamber portions (15, 25) delimited thereby, wherein the retaining action is achieved by the concavity of the resilient tongues (13, 14) in conjunction with the concavity of one (7) of the encircling members.

2. A retaining means according to Claim 1, characterised in that one resilient tongue (13) bears against the other resilient tongue (14).

3. A retaining means according to either Claim 1 or Claim 2, characterised in that at its free end (23) one resilient tongue (14) is designed to bear against the encircling member (3).

4. A retaining means according to any one of Claims 1 to 3, characterised in that the projection (21, 22) is kept so short and/or flexible that the accommodating chamber portions (15, 25) delimited by it can be used as a uniform accommodating chamber.

5. A retaining means according to any one of Claims 1 to 4, characterised in that one projection (18, 19) separates the opening (4) from the adjacent accommodating chamber portion (15).

6. A retaining means according to Claim 5, characterised in that the projection (19) is designed to be resilient.


**Revendications**

1. Elément de fixation pour un ou plusieurs objets de forme allongée, comprenant un corps d'entourage (3) en forme d'U, qui comprend deux parties (3, 7), délimite un espace de logement (12) pour les objets, présente une ouverture (4) pouvant être fermée par une patte encliquetable (5) et contient, dans l'espace de logement (12), des languettes à ressort saillantes (13, 14) pour le positionnement élastiquement souple des objets, languettes par lesquelles il est formé au moins deux espaces de logement partiels (15, 25), caractérisé en ce que les espaces de logement partiels (15, 25) sont limités d'un côté par l'une (7) des parties d'entourage et, de l'autre côté, par les languettes à ressort (13, 14) qui présentent chacune, deux côtés d'une saillie (21, 22), une surface concave (16, 26) dirigée vers les espaces de logement partiels (15, 25) limités par ces languettes, l'assujettissement des objets étant assuré par la concavité des languettes à ressort (13, 14) en combinaison avec la concavité de l'une (7) des parties d'entourage.

2. Elément de fixation selon la revendication 1, caractérisé en ce que l'une (13) des languettes à ressort prend appui sur l'autre (14).

3. Elément de fixation selon la revendication 1 ou 2, caractérisé en ce qu'une languette à ressort (14) est réalisée, à son extrémité libre (23), sous une forme lui permettant de prendre appui sur le corps d'entourage (3).

4. Elément de fixation selon l'une quelconque des revendications 1 à 3, caractérisé en ce que la saillie (21, 22) est suffisamment courte et/ou flexible pour que les espaces de logement partiels (15, 25) qu'elle délimite puissent être utilisés comme un unique espace de logement.

5. Elément de fixation selon l'une quelconque des revendications 1 à 4, caractérisé en ce qu'une saillie (18, 19) sépare l'ouverture (4) de l'espace de logement (15) immédiatement voisin.

6. Elément de fixation selon la revendication 5, caractérisé en ce que la saillie (19) est réalisée sous forme élastique.

Fig. 3

Fig. 1

Fig. 2

Fig. 4

Fig. 5

Fig. 6